# EUROPEAN PATENT SPECIFICATION

(11) **EP 3 135 892 B1**
(45) Date of publication and mention of the grant of the patent: **12.09.2018**
(21) Application number: 16180297.0
(22) Date of filing: 20.07.2016
(51) Int. Cl.: F02K 1/48

(54) **EXHAUST MIXER WITH OUTER LOBE CONSTRAINT BAND**
ABGASMISCHVORRICHTUNG MIT ÄUSSEREM NOCKENEINSCHRÄNKUNGSBAND
MÉLANGEUR DE GAZ D'ÉCHAPPEMENT AVEC BANDE DE CONTRAINTE DE LOBE EXTÉRIEUR

(30) Priority: 27.08.2015 US 201562210642 P
(43) Date of publication of application: 01.03.2017
(73) Proprietor: Rolls-Royce North American Technologies, Inc., Indianapolis, IN 46241 (US)
(72) Inventor: HEFFERNAN, Tab M., Plainfield, IN Indiana 46168 (US); PESYNA, Kenneth M., Carmel, IN Indiana 46033 (US)
(74) Representative: Gille Hrabal

(56) References cited:
- EP-A1- 0 635 632
- EP-A1- 0 916 834
- EP-A2- 2 778 380
- FR-A1- 2 875 854
- JP-A- 2003 314 368
- US-A- 3 647 021
- US-A- 5 265 807
- US-A- 5 884 472
- US-A1- 2010 199 626
- US-A1- 2011 036 068
- US-B1- 6 412 283

## Description

### FIELD OF THE DISCLOSURE

The present disclosure relates generally to gas turbine engines, and more specifically to exhaust components used in gas turbine engines.

### BACKGROUND

Some gas turbine engines, see for example EP 0 635 632 A1 or US 2010/0199626 A1, include mixers that are operable to mix various gas streams discharged from a gas turbine engine. Operational loads applied to such mixers can cause the mixers to experience vibrations and deflections, sometimes leading to mechanical breakdowns of the mixers. Reducing vibrations and deflections experienced by these mixers remains an area of interest.

### SUMMARY

The invention is defined by the technical features of independent claim 1. Advantageous embodiments are defined by the dependent claims.

According to the invention, a gas turbine engine exhaust component includes an annular mixer and an outer lobe constraint band. The annular mixer extends around a central axis and is formed to include inner lobes that define radially-outwardly opening channels and outer lobes that define radially-inwardly opening channels. The outer lobe constraint band interconnects radially-outwardly facing surfaces of the outer lobes of the annular mixer to stiffen the annular mixer. The outer lobe constraint band forms a full hoop around the central axis.

In some embodiments, the outer lobes of the annular mixer may include trailing edge portions cooperatively defining an aft end of the annular mixer, and the outer lobe constraint band may interconnect the radially-outwardly facing surfaces at the trailing edge portions of the outer lobes. Additionally, in some embodiments, the gas turbine engine exhaust component may further include a braze layer securing the outer lobe constraint band to at least one of the radially-outwardly facing surfaces of the outer lobes. The outer lobe constraint band may be positioned radially outward of the outer lobes relative to the central axis. The outer lobe constraint band may have a generally rectangular cross section. In other embodiments, the outer lobe constraint band may have an airfoil-shaped cross section. In other embodiments still, the outer lobe constraint band may have a generally cylindrical cross section.

Not part of the invention, portions of the outer lobe constraint band may be integral with the outer lobes of the annular mixer. According to the invention, in some embodiments, the thickness of the outer lobe constraint band may enable outer lobe-spanning portions of the outer lobe constraint band extending between circumferentially adjacent outer lobes to twist relative to outer lobe-engaging portions of the outer lobe constraint band engaged with the circumferentially adjacent outer lobes during operation of the annular mixer. According to the invention, the outer lobe-engaging portions of the outer lobe constraint band is generally curved to complement the shape of the circumferentially adjacent outer lobes prior to operation of the annular mixer.

According to the invention, a gas turbine engine exhaust component includes a mixer and an outer lobe constraint band. The mixer has a forward portion configured to be coupled to an exhaust mount included in a gas turbine engine and an aft portion formed to include a plurality of outer lobes that define radially-inwardly opening channels. The outer lobes are circumferentially spaced from one another about a central axis. The outer lobe constraint band interconnects the plurality of outer lobes formed by the mixer to stiffen the mixer.

In some embodiments, the outer lobes of the mixer may include trailing edge portions cooperatively defining an aft end of the mixer, and the outer lobe constraint band may interconnect the outer lobes at the trailing edge portions of the outer lobes. The trailing edge portions of the outer lobes may be surrounded by the outer lobe constraint band. The outer lobe constraint band may have a generally rectangular cross section. In other embodiments, the outer lobe constraint band may have an airfoil-shaped cross section. In other embodiments still, the outer lobe constraint band may have a generally cylindrical cross section. Additionally, in some embodiments, the gas turbine engine exhaust component may include a braze layer securing the outer lobe constraint band to a trailing edge portion of at least one of the outer lobes of the mixer. Furthermore, according to the invention, the thickness of the outer lobe constraint band may enable outer lobe-spanning portions of the outer lobe constraint band extending between circumferentially adjacent outer lobes to twist relative to outer lobe-engaging portions of the outer lobe constraint band engaged with trailing edge portions of the circumferentially adjacent outer lobes during operation of the mixer.

According to the invention, the outer lobe-engaging portions of the outer lobe constraint band are generally curved to complement the shape of the trailing edge portions of the circumferentially adjacent outer lobes. Not according to the invention, portions of the outer lobe constraint band may be integral with the outer lobes of the mixer.

These and other features of the present disclosure will become more apparent from the following description of the illustrative embodiments.

### BRIEF DESCRIPTION OF THE DRAWINGS

Fig. 1 is a perspective view of a gas turbine engine component that includes an annular mixer having outer lobes and an outer lobe constraint band interconnecting the outer lobes;
Fig. 2 is a detail view of a portion of the gas turbine engine component of Fig. 1 showing that the outer lobe constraint band interconnects radially-outwardly facing surfaces of the outer lobes at trailing-edge portions of the outer lobes;
Fig. 3 is a sectional view of the rectangular cross-sectional shape of an outer lobe constraint band like that shown in Figs. 1 and 2;
Fig. 4 is a sectional view of the airfoil cross-sectional shape of another outer lobe constraint band like that shown in Figs. 1 and 2; and
Fig. 5 is a sectional view of the generally round cross-sectional shape of yet another outer lobe constraint band like that shown in Figs. 1 and 2.

### DETAILED DESCRIPTION OF THE DRAWINGS

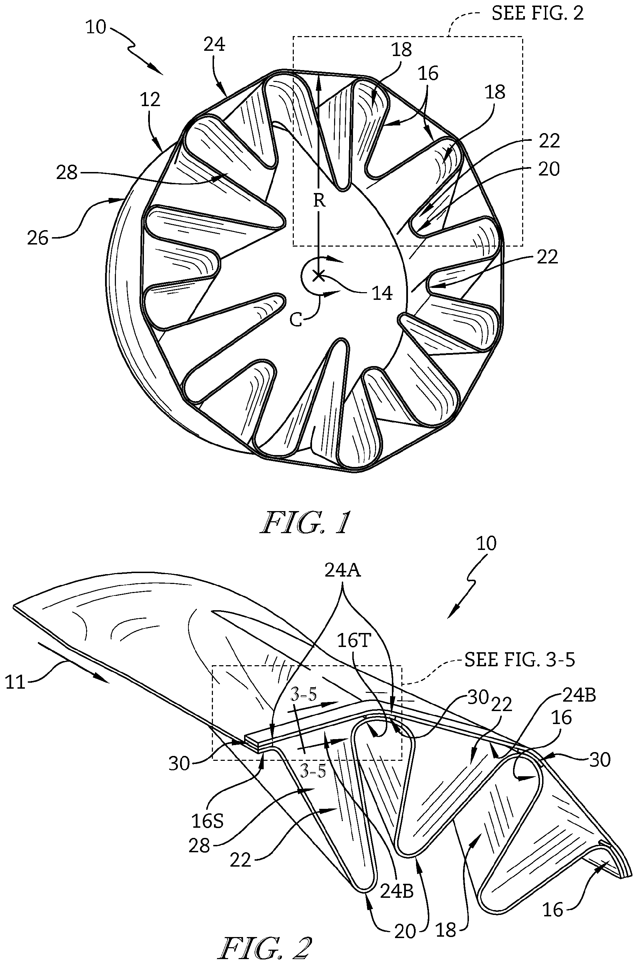

Referring now to Fig. 1, a component 10 illustratively configured for use in a gas turbine engine is shown. The component 10 is configured to receive various gas streams discharged from the gas turbine engine along the direction 11 and mix the gas streams before the gas streams are exhausted from the gas turbine engine. As such, the component 10 may be referred to herein as a gas turbine engine exhaust component 10.

The gas turbine engine exhaust component 10 illustratively includes an annular mixer 12 as shown in Fig. 1. The annular mixer 12 extends around a central axis 14. The annular mixer 12 is formed to include a number of outer lobes 16 that define channels 18 that open inwardly in the radial direction indicated by arrow R. Each of the outer lobes 16 has a surface 16S facing outwardly in the radial direction indicated by arrow R, as best seen in Fig. 2. The annular mixer 12 is also formed to include a number of inner lobes 20 that define channels 22 that open outwardly in the radial direction indicated by arrow R. The inner lobes 20 are arranged in the circumferential direction indicated by arrow C about the axis 14 between the outer lobes 16.

The gas turbine engine exhaust component 10 also illustratively includes an outer lobe constraint band 24 as shown in Fig. 1. The outer lobe constraint band 24 extends around the central axis 14 to form a full hoop around the axis 14. The outer lobe constraint band 24 interconnects the surfaces 16S of the outer lobes 16 to stiffen the annular mixer 12, as best seen in Figs. 1-2. As described in greater detail below, the stiffened annular mixer 12 can experience less vibration and deflection than an annular mixer not stiffened by an outer lobe constraint band.

The annular mixer 12 is illustratively configured to receive various gas streams discharged from the gas turbine engine at a forward end 26 thereof as suggested by Fig. 1. To receive the various gas streams passing through the gas turbine engine, the forward end 26 may be configured to couple to an exhaust mount included in the gas turbine engine. The annular mixer 12 is configured to conduct the gas streams from the forward end 26 toward an aft end 28 opposite the forward end 26 to mix the gas streams together. After being mixed, the gas streams may be exhausted from the gas turbine engine. For example, the mixed gas streams may be exhausted through an exhaust nozzle that is fluidly coupled to and positioned aft of the aft end 28 of the mixer 12. Mixing the gas streams of the gas turbine engine by the mixer 12 can improve the performance of the gas turbine engine.

In one embodiment, the annular mixer 12 may be configured to receive an engine core gas stream passing through an engine core of the gas turbine engine and a bypass gas stream passing around the engine core of the engine. In such embodiments, the gas turbine engine may be embodied as, or otherwise include, a turbofan engine. Additionally, in these embodiments, the mixer 12 may be positioned aft of a fan over which the bypass stream passes and a turbine over which the engine core stream passes.

In another embodiment, the annular mixer 12 may be embodied as, or otherwise include, an infrared suppressor configured for use with a gas turbine engine. For instance, the annular mixer 12 may be embodied as, or otherwise include, an infrared suppressor configured for use with a turboshaft or turboprop engine.

In some embodiments, the annular mixer 12 may be a one-piece annular component. In other embodiments, the annular mixer 12 may be a multi-piece assembled annular component. In other embodiments still, the annular mixer 12 may be made up of a number of independent segments arranged about the axis 14.

Referring now to Fig. 2, the gas turbine engine exhaust component 10 also illustratively includes braze layers 30 that are used to secure the outer lobe constraint band 24 to the outer lobes 16. Specifically, one braze layer 30 is positioned between each of the surfaces 16S and the outer lobe constraint band 24 to secure the outer lobe constraint band 24 to each of the surfaces 16S.

In the illustrative embodiment, the outer lobes 16 and the outer lobe constraint band 24 are separately-formed components secured to one another by the braze layers 30. In other embodiments, the outer lobes 16 and the outer lobe constraint band 24 may be welded to one another, or secured together by a mechanical component, such as a fastener, a coupler, or the like. In other embodiments still, the outer lobes 16 may be integral with portions of the outer lobe constraint band 24. For example, the surfaces 16S of the outer lobes 16 may be integral with portions of the outer lobe constraint band 24 such that the annular mixer 12 and the outer lobe constraint band 24 make up a one-piece component.

The outer lobe constraint band 24 illustratively includes outer lobe-engaging portions 24A and outer lobe-spanning portions 24B interconnected with the outer lobe-engaging portions 24A as shown in Fig. 2. The outer lobe-engaging portions 24A are engaged with the surfaces 16S of the outer lobes 16. The outer lobe-spanning portions 24B extend between outer lobes 16 that are adjacent to one another in the circumferential direction indicated by arrow C. The outer lobe-spanning portions 24B are positioned outwardly of the channels 22 in the radial direction indicated by arrow R.

The shape of the illustrative outer lobe constraint band 24 prior to operation of the annular mixer 12 is best seen in Fig. 2. The outer lobe-engaging portions 24A are generally curved to complement the curvature of the outer lobes 16 that are adjacent to each other in the circumferential direction indicated by arrow C. The outer lobe-spanning portions 24B are generally curved as well. As described in greater detail below, the degree of curvature of the outer lobe constraint band 24 may change during operation of the gas turbine engine exhaust component 10.

The outer lobes 16 illustratively include trailing edge portions 16T that cooperate to define the aft end 28 of the annular mixer 12 as shown in Fig. 2. The outer lobe constraint band 24 interconnects the surfaces 16S of the outer lobes 16 at the trailing edge portions 16T of the outer lobes 16. The outer lobe constraint band 24 is positioned outwardly of the outer lobes 16 in the radial direction indicated by arrow R.

During operation of the gas turbine engine exhaust component 10, the degree of curvature of the outer lobe constraint band 24 may change. For example, when heat is applied to the outer lobe constraint band 24 and pressure rises in the channels 18 formed by the outer lobes 16 during operation of the annular mixer 12, the curvature of the outer lobe constraint band 24 may decrease. Thus, the outer lobe constraint band 24 may flatten (i.e., become more planar) during operation of the component 10.

Portions of the outer lobe constraint band 24 may achieve orientations differing from one another during operation of the gas turbine engine exhaust component 10. Specifically, the outer lobe-spanning portions 24B of the outer lobe constraint band 24 may achieve orientations different from the outer lobe-engaging portions 24A of the outer lobe constraint band 24.

The thickness of the outer lobe constraint band 24 may permit the outer lobe-spanning portions 24B to twist in a controlled manner relative to the outer lobe-engaging portions 24A during operation of the gas turbine engine exhaust component 10. In the illustrative embodiment, the band 24 has a generally flat cross section and a thickness of about 0.012 inches. It is contemplated that the outer lobe constraint band 24 may have a thickness between about, or precisely, 0.005 inches and 0.2 inches. In other embodiments, however, the band 24 may have another suitable thickness.

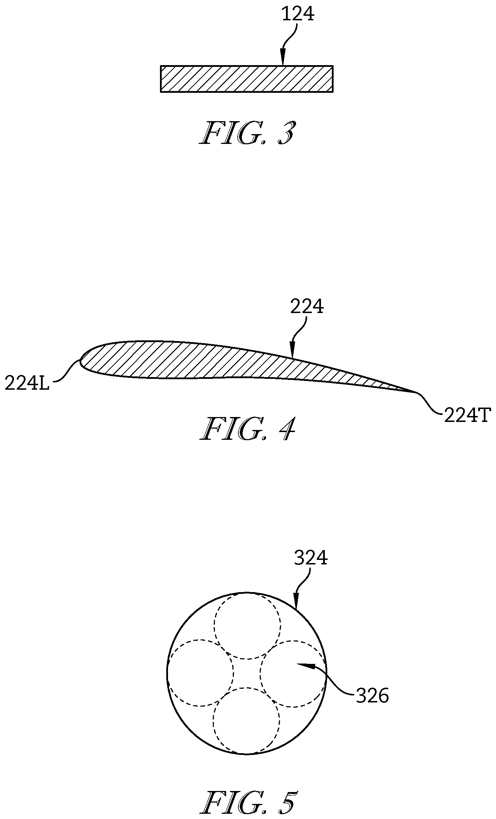

Referring now to Figs. 3-5, cross sections of illustrative outer lobe constraint bands 124, 224, 324 are shown. The bands 124, 224, 324 are substantially identical to the outer lobe constraint band 24 shown in, and described above with reference to, Figs. 1-2. Because the outer lobe constraint band 24 does not have a cross section limited to a particular shape, any one of the bands 124, 224, 324, whose cross sections differ as described below, may be provided as the outer lobe constraint band 24. As such, any mention herein of the outer lobe constraint band 24 does not specify a particular one of the bands 124, 224, 324, but encompasses any one of the bands 124, 224, 324.

Referring now to Fig. 3, the outer lobe constraint band 124 illustratively has a generally rectangular cross section. In one embodiment, the outer lobe constraint band 124 may be formed from a metallic material. In another embodiment, the outer lobe constraint band 124 may be formed from a polymeric material, or another suitable material.

Referring now to Fig. 4, the outer lobe constraint band 224 illustratively has an airfoil-shaped cross section. A leading edge 224L of the airfoil-shaped cross section formed by the outer lobe constraint band 224 may be located axially forward of a trailing edge 224T of the airfoil-shaped cross section formed by the outer lobe constraint band 224. In one embodiment, the outer lobe constraint band 224 may be formed from a metallic material. In another embodiment, the outer lobe constraint band 224 may be formed from a polymeric material, or another suitable material.

Referring now to Fig. 5, the outer lobe constraint band 324 illustratively has a generally cylindrical cross section. The outer lobe constraint band 324 is formed from a number of cable-like fibers 326 (shown in phantom) that may be arranged in a variety of configurations. For example, the fibers 326 may be twisted or woven together to form the band 324. In one embodiment, the fibers 326 may be formed from a metallic material. In another embodiment, the fibers 326 may be formed from a polymeric material, or another suitable material.

In conventional constructions, the unsupported lobes and flexible geometries of exhaust-lobed-mixers may lead to design and/or operational complications. For example, vibration problems, high deflections, and high stresses when operating loads are applied may be experienced by such mixers. In some instances, high cycle fatigue cracking may result. Efforts to address these issues may involve increasing the mass of the mixers and/or preloading the mixers with one or more support components. These efforts, however, may add both cost and weight to the mixers, and may therefore present a number of drawbacks.

The present disclosure provides connection bands, such as outer lobe constraint bands 24, 124, 224, 324, between mixer lobes, such as outer lobes 16, to address the complications described above. The connection bands may limit the deflection of the mixer lobes and may result in a stiffer mixer, like the mixer 12, that experiences reduced stresses and undesirable vibratory resonance conditions.

The lobe band connector described herein may minimize undesirable dynamic resonance conditions experienced by the mixer by increasing the structural stiffness of the mixer and thereby increasing the natural frequencies of the mixer. The mixer may therefore be more durable and more lightweight than the structures resulting from prior efforts to address such dynamic resonance conditions.

The cross-sections of the lobe connection band may be shaped and constructed to minimize aerodynamic losses and vibrations. Some of the cross-section contemplated by the present disclosure may include circular or cylindrical-like shapes (like the outer lobe constraint band 324), airfoil-like shapes (like the outer lobe constraint band 224), and twisted or woven-cable like fiber shapes (like the outer lobe constraint band 324).

Structural analysis of the present disclosure may be used to demonstrate the efficacy of the proposed solution in addressing the complications described above. To join the lobe band connector to the lobes of the mixer, a number of methods may be used. For example, the lobe band connector may be joined to the lobes of the mixer via a braze layer, welding, or another suitable mechanical attachment.

Structural analysis of the present disclosure, presuming the lobe band connector is joined to the lobes of the mixer via a braze layer, has demonstrated that the maximum deflection of the lobes with the lobe band connector is smaller than the maximum deflection of the lobes without the lobe band connector. In one specific example, structural analysis has demonstrated that the maximum deflection of the lobes with the lobe band connector is about thirty-eight times smaller than the maximum deflection of the lobes without the lobe band connector. The proposed solution may therefore improve mixer aerodynamic performance and increase part life.

Structural analysis of the present disclosure, presuming the lobe band connector is joined to the lobes of the mixer via a braze layer, has demonstrated that the peak stress experienced by the lobes with the lobe band connector is smaller than the peak stress experienced by the lobes without the lobe band connector. In one specific example, structural analysis has demonstrated that the peak stress experienced by the lobes with the lobe band connector is about five times smaller than the peak stress experienced by the lobes of the conventional mixer (i.e., without the lobe band connector). The proposed solution thus may improve mixer durability.

Dynamic analysis of the designs included in present disclosure, presuming the lobe band connector is joined to the lobes of the mixer via a braze layer, has demonstrated that the peak dynamic stresses experienced by the mixer with the lobe band connector are smaller than the peak stresses experienced by the lobes without the lobe band connector. In one specific example, structural analysis has demonstrated that the peak stresses experienced by the lobes with the lobe band connector are about ten times lower than the peak stresses experienced by the conventional mixer (i.e., without the lobe band connector).

While the disclosure has been illustrated and described in detail in the foregoing drawings and description, the same is to be considered as exemplary and not restrictive in character, it being understood that only illustrative embodiments thereof have been shown and described and that the scope of protection is defined by the appended claims.

## Claims

1. A gas turbine engine exhaust component (10), the component (10) comprising
an annular mixer (12) that extends around a central axis (14), the annular mixer (12) formed to include inner lobes (20) that define radially-outwardly opening channels (22) and outer lobes (16) that define radially-inwardly opening channels (18), and
an outer lobe constraint band (24) that interconnects radially-outwardly facing surfaces (16S) of the outer lobes (16) of the annular mixer (12) to stiffen the annular mixer (12),
wherein the outer lobe constraint band (24) forms a full hoop around the central axis (14),
wherein the thickness of the outer lobe constraint band (24) optionally enables outer lobe-spanning portions (24B) of the outer lobe constraint band (24) extending between circumferentially adjacent outer lobes (16) to twist relative to outer lobe-engaging portions (24A) of the outer lobe constraint band (24) engaged with the circumferentially adjacent outer lobes (16) during operation of the annular mixer (12), and
wherein the outer-lobe engaging portions (24A) of the outer lobe constraint band (24) are generally curved to complement the shape of the circumferentially adjacent outer lobes (16) prior to operation of the annular mixer (12).

2. The component (10) of claim 1, wherein the outer lobes (16) of the annular mixer (12) include trailing edge portions (16T) cooperatively defining an aft end (28) of the annular mixer (12), and the outer lobe constraint band (24) interconnects the radially-outwardly facing surfaces (16S) at the trailing edge portions (16T) of the outer lobes (16).

3. The component (10) of one of the preceding claims, further comprising a braze layer (30) securing the outer lobe constraint band (24) to at least one of the radially-outwardly facing surfaces (16S) of the outer lobes (16).

4. The component (10) of one of the preceding claims, wherein the outer lobe constraint band (24) is positioned radially outward of the outer lobes (16) relative to the central axis (14).

5. The component (10) of one of the preceding claims,, wherein the outer lobe constraint band (24) has a generally rectangular cross section, an airfoil-shaped cross section or a generally cylindrical cross section.

6. The component (10) of claim 1, wherein the annular mixer (12) has a forward portion configured to be coupled to an exhaust mount included in a gas turbine engine and an aft portion formed to include the outer lobes (16), and the outer lobes (16) are circumferentially spaced from one another about the central axis (14).

7. The component (10) of claim 6, wherein the outer lobes (16) of the mixer (12) include trailing edge portions (16T) cooperatively defining an aft end (28) of the mixer (12), and the outer lobe constraint band (24) interconnects the outer lobes (16) at the trailing edge portions (16T) of the outer lobes (16).

8. The component (10) of claim 7, wherein the trailing edge portions (16T) of the outer lobes (16) are surrounded by the outer lobe constraint band (24).

9. The component (10) of claim 6, 7 or 8, further comprising a braze layer (30) securing the outer lobe constraint band (24) to a trailing edge portion of at least one of the outer lobes (16) of the mixer (12).

10. The component (10) of claim 7, wherein the thickness of the outer lobe constraint band (24) enables the outer lobe-spanning portions (24B) of the outer lobe constraint band (24) to twist relative to the outer lobe-engaging portions (24A) of the outer lobe constraint band (24) engaged with the trailing edge portions (16T) of the circumferentially adjacent outer lobes (16) during operation of the mixer (12).

## Patentansprüche

1. Gasturbinenmotor-Abgasanlagenkomponente (10), wobei die Komponente (10) umfasst
einen ringförmigen Mischer (12), der sich um eine zentrale Achse (14) erstreckt, wobei der ringförmige Mischer (12) ausgebildet ist, um innere Lappen (20), die radial nach außen öffnende Kanäle (22) definieren, und äußere Lappen (16), die radial nach innen öffnende Kanäle (18) definieren, zu umfassen, und
ein Außenlappenbegrenzungsband (24), das radial nach außen gerichtete Flächen (16S) der äußeren Lappen (16) des ringförmigen Mischers (12) miteinander verbindet, um den ringförmigen Mischer (12) zu versteifen,
wobei das Außenlappenbegrenzungsband (24) einen vollständigen Umfangring um die Mittelachse (14) bildet,
wobei die Dicke des Außenlappenbegrenzungsbands (24) optional erlaubt, dass sich Außenlappenüberspannungsabschnitte (24B) des Außenlappenbegrenzungsbands (24), die sich zwischen in Umfangsrichtung benachbarten äußeren Lappen (16) erstrecken, relativ zu Außenlappeneingriffsabschnitten (24A) des Außenlappenbegrenzungsbands (24), die mit den in Umfangsrichtung benachbarten äußeren Lappen (16) während des Betriebs des ringförmigen Mischers (12) in Eingriff stehen, verdrehen, und
wobei die Außenlappeneingriffsabschnitte (24A) des Außenlappenbegrenzungsbands (24) vor Betrieb des ringförmigen Mischers (12) allgemein gekrümmt sind, um die Form der in Umfangsrichtung benachbarten äußeren Lappen (16) zu komplettieren.

2. Komponente (10) nach Anspruch 1, wobei die äußeren Lappen (16) des ringförmigen Mischers (12) Hinterkantenabschnitte (16T) aufweisen, die zusammen ein hinteres Ende (28) des ringförmigen Mischers (12) definieren, und wobei das Außenlappenbegrenzungsband (24) die radial nach außen gerichteten Flächen (16S) an den Hinterkantenabschnitten (16T) der äußeren Lappen (16) verbindet.

3. Komponente (10) nach einem der vorhergehenden Ansprüche, ferner umfassend eine Hartlötschicht (30), die das Außenlappenbegrenzungsband (24) an mindestens einer der radial nach außen gerichteten Flächen (16S) der äußeren Lappen (16) befestigt.

4. Komponente (10) nach einem der vorhergehenden Ansprüche, wobei das Außenlappenbegrenzungsband (24) radial außerhalb der äußeren Lappen (16) relativ zur zentralen Achse (14) angeordnet ist.

5. Komponente (10) nach einem der vorhergehenden Ansprüche, wobei das Außenlappenbegrenzungsband (24) einen allgemein rechteckigen Querschnitt, einen schaufelförmigen Querschnitt oder einen allgemein zylindrischen Querschnitt aufweist.

6. Komponente (10) nach Anspruch 1, wobei der ringförmige Mischer (12) einen vorderen Abschnitt aufweist, der dazu konfiguriert ist, um mit einer in einem Gasturbinenmotor enthaltenen Abgasanlagenhalterung gekoppelt zu werden, und einen hinteren Abschnitt aufweist, der so ausgebildet ist, dass er die äußeren Lappen (16) umfasst, und die äußeren Lappen (16) in Umfangsrichtung um die zentrale Achse (14) voneinander beabstandet sind.

7. Komponente (10) nach Anspruch 6, wobei die äußeren Lappen (16) des Mischers (12) Hinterkantenabschnitte (16T) umfassen, die zusammen ein hinteres Ende (28) des Mischers (12) definieren, und das Außenlappenbegrenzungsband (24) die äußeren Lappen (16) an den Hinterkantenabschnitten (16T) der äußeren Lappen (16) verbindet.

8. Komponente (10) nach Anspruch 7, wobei die Hinterkantenabschnitte (16T) der äußeren Lappen (16) von dem Außenlappenbegrenzungsband (24) umgeben sind.

9. Komponente (10) nach Anspruch 6, 7 oder 8, ferner umfassend eine Hartlötschicht (30), die das Außenfappenbegrenzungsband (24) an einem Hinterkantenabschnitt mindestens eines der äußeren Lappen (16) des Mischers (12) befestigt.

10. Komponente (10) nach Anspruch 7, wobei die Dicke des Außenlappenbegrenzungsbands (24) es den Außenlappenüberspannungsabschnitten (24B) des Außenlappenbegrenzungsbands (24) erlaubt, sich relativ zu den Außenlappeneingriffsabschnitten (24A) des Außenlappenbegrenzungsbands (24), die mit den in Umfangsrichtung benachbarten äußeren Lappen (16) während des Betriebs des Mischers (12) in Eingriff stehen, zu verdrehen.

## Revendications

1. Composant d'échappement de moteur à turbine à gaz (10), le composant (10) comprenant :
un mélangeur annulaire (12), qui s'étend autour d'un axe central (14), le mélangeur annulaire (12) étant formé de sorte qu'il comprend des lobes intérieurs (20), qui définissent des canaux d'ouverture radialement vers l'extérieur (22) et des lobes extérieurs (16), qui définissent des canaux d'ouverture radialement vers l'intérieur (18), et
une bande de contrainte de lobe extérieur (24), qui relie des surfaces tournées radialement vers l'extérieur (16S) des lobes extérieurs (16) du mélangeur annulaire (12) l'une à l'autre pour raidir le mélangeur annulaire (12),
dans lequel la bande de contrainte de lobe extérieur (24) forme une cercle entier autour de l'axe central (14),
l'épaisseur de la bande de contrainte de lobe extérieur (24) permettant facultativement à des parties recouvrant les lobes extérieurs (24B) de la bande de contrainte de lobe extérieur (24) de s'étendre entre des lobes extérieurs adjacents de manière circonférentielle (16) pour se tourner par rapport à des parties d'engagement dans les lobes extérieurs (24A) de la bande de contrainte de lobe extérieur (24), lesquelles sont en prise avec les lobes extérieurs adjacents de manière circonférentielle (16) pendant le fonctionnement du mélangeur annulaire (12), et
les parties d'engagement dans les lobes extérieurs (24A) de la bande de contrainte de lobe extérieur (24) étant généralement courb ées pour s'harmoniser avec la forme des lobes extérieurs adjacents de manière circonférentielle (16) avant le fonctionnement du mélangeur annulaire (12).

2. Composant (10) selon la revendication 1, dans lequel les lobes extérieurs (16) du mélangeur annulaire (12) comprennent des parties de flanc arrière (16T), qui définissent ensemble une extrémité arrière (28) du mélangeur annulaire (12), et la bande de contrainte de lobe extérieur (24) relie les surfaces tournées radialement vers l'extérieur (16S) l'une à l'autre dans les parties de flanc arrière (16T) des lobes extérieurs (16).

3. Composant (10) selon l'une des revendications précédentes, comprenant en outre une couche de brasage (30), qui fixe la bande de contrainte de lobe extérieur (24) à l'au moins une des surfaces tournées radialement vers l'extérieur (16S) des lobes extérieurs (16).

4. Composant (10) selon l'une des revendications précédentes, dans lequel la bande de contrainte de lobe extérieur (24) est positionnée radialement vers l'extérieur des lobes extérieurs (16) par rapport à l'axe central (14).

5. Composant (10) selon l'une des revendications précédentes, dans lequel la bande de contrainte de lobe extérieur (24) comprend une section transversale généralement rectangulaire, une section transversale en forme de voilure ou une section transversale généralement cylindrique.

6. Composant (10) selon la revendication 1, dans lequel le mélangeur annulaire (12) comprend une partie avant configurée pour être couplée à une monture d'échappement disposée dans un moteur à turbine à gaz et une partie arrière formée de sorte qu'elle comprend les lobes extérieurs (16) et les lobes extérieurs (16) sont espacés l'un de l'autre de manière circonférentielle autour de l'axe central (14).

7. Composant (10) selon la revendication 6, dans lequel les lobes extérieurs (16) du mélangeur (12) comprennent des parties de flanc arrière (16T), qui définissent ensemble une extrémité arrière (28) du mélangeur (12), et la bande de contrainte de lobe extérieur (24) relie les lobes extérieurs (16) l'un à l'autre dans les parties de flanc arrière (16T) des lobes extérieurs (16).

8. Composant (10) selon la revendication 7, dans lequel les parties de flanc arrière (16 T) des lobes extérieurs (16) sont entourées par la bande de contrainte de lobe extérieur (24).

9. Composant (10) selon la revendication 6, la revendication 7 ou la revendication 8, comprenant en outre une couche de brasage (30), qui fixe la bande de contrainte de lobe extérieur (24) à une partie de flanc arrière d'au moins un des lobes extérieurs (16) du mélangeur (12).

10. Composant (10) selon la revendication 7, dans lequel l'épaisseur de la bande de contrainte de lobe extérieur (24) permet à des parties recouvrant les lobes extérieurs (24B) de la bande de contrainte de lobe extérieur (24) de se tourner par rapport à des parties d'engagement dans les lobes extérieurs (24A) de la bande de contrainte de lobe extérieur (24), lesquelles sont en prise avec les parties de flanc arrière (16T) des lobes extérieurs adjacents de manière circonférentielle (16) pendant le fonctionnement du mélangeur (12).
